# EUROPEAN PATENT SPECIFICATION

(11) **EP 0 552 911 B1**
(45) Date of publication and mention of the grant of the patent: **19.12.2001**
(21) Application number: 93300315.4
(22) Date of filing: 19.01.1993
(51) Int. Cl.: B32B 27/34, B65D 65/40, B32B 27/32

(54) **Cook-in film with improved seal strength**
Folie zum Kochen in der Verpackung mit verbesserter Siegelfähigkeit
Feuille convenant à la cuisson à force de scellement améliorée

(30) Priority: 21.01.1992 US 823491; 09.04.1992 US 865580
(43) Date of publication of application: 28.07.1993
(73) Proprietor: Cryovac, Inc., Duncan, S.C. 29334-0464 (US)
(72) Inventor: Bekele, Solomon, Taylors, SC 29687 (US)
(74) Representative: Bentham, Stephen

(56) References cited:
- EP-A- 0 170 385
- EP-A- 0 269 325
- EP-A- 0 451 977
- GB-A- 2 129 370
- US-A- 4 233 367
- DATABASE WPIL Derwent Publications Ltd., London, GB; & JP-A-4 164 641 (SUMITOMO BAKELITE CO.) 10 June 1992

## Description

The field of the invention is a packaging film from which bags and casings can be made which have improved structural soundness so that they may be fully characterized as "cook-in." The term "cook-in" as used herein is intended to refer to packaging material structurally capable of withstanding exposure to cook-in time-temperature conditions while containing a food product.

This invention relates generally to thermoplastic films suitable for cook-in packaging, and more particularly to cook-in food films. These films also have food contact surface characteristics which promote binding adherence to a contained food product during cook-in. The films of the invention exhibit improved hot and cold heat seal strength as compared to known films having a food contact layer that bindingly adheres to a contained meat product during cook-in.

Cook-in packaged foods are essentially foods cooked in the package in which they are distributed to the consumer and which may be consumed with or without warming. Cook-in time-temperature conditions typically refer to a long slow cook, for example, submersion in hot water at about 55°C to about 65°C for about 1 to about 4 hours. These conditions are representative of institutional cooking requirements. Submersion at about 70°C to about 100°C for up to about 12 hours represents the limiting case. Under such conditions, a cook-in packaging material should maintain seal integrity, i.e., any heat sealed seams should resist being pulled apart during cook-in. The film should also be heat sealable to itself and, the packaging film substantially conformable to the contained food product. Preferably, this substantial conformability is achieved by the film being heat shrinkable under these conditions so as to form a tightly fitting package, i.e., the film should be heat shrinkable under these time-temperature conditions and should possess sufficient shrink energy so that submerging the packaged food product in hot water will shrink the packaging film snugly around the contained product, and especially up to about 55% monoaxial and/or biaxial shrinkage.

The film should also have food product adherence to restrict "cook-out" or collection of juices between the surface of the contained food product and the food contact surface of the packaging material during cook-in, thereby increasing product yield. More particularly, in the types of multilayer films wherein the first "sealing and food contact" layer is of the type of material that adheres to a contained food product during cook-in, this first layer may alternatively be referred to as the "adhering layer." As used herein, the term "adhere" is intended to mean that the food contact surface of the film bonds during cook-in to the contained food product to an extent sufficient to substantially prevent accumulation of fluids between the film and the contained product.

A heat shrinkable, cook-in film is described by Oberle et al, U. S. Patent No. 4,469,742 that includes a first "sealing or food contact" layer of a nonlipophillic polymeric material having a softening point greater than that of the following shrink layer; a second layer, of an ethylene homopolymer or copolymer melt bonded to the first layer; a third or adhesive layer, melt bonded to the second layer, of a chemically modified polyethylene being irradiatively crosslinkable and having functional groups with a relatively strong affinity for the following barrier layer, the third layer melt bonded to the second layer; a fourth or barrier layer of a hydrolyzed ethylene vinyl acetate copolymer melt bonded to the third layer; a fifth or adhesive layer as in said third layer, melt bonded to the fourth layer; and a sixth or abuse layer, melt bonded to the fifth layer. In one embodiment, the first "sealing and food contact" layer is a metal salt neutralized copolymer of an olefin and a carboxylic acid, representatively Surlyn™, which, according to the patentee, is a type of material that adheres to a contained meat product during cook-in. This Surlyn™ layer also functions as a protein-adhering layer. The patent also describes a method for making the film including full coextrusion and selective irradiation and orientation.

In the conventional method of manufacturing heat shrinkable film as described by Oberle et al, a tubular orientation process is utilized wherein a primary tube of the film is biaxially oriented by formation of a bubble to create internal pressure and induce stretching in the transverse direction and with the use of pinch rolls at different speeds to induce stretching in the machine direction. The stretched bubble is then collapsed, and the film is wound up as flattened, seamless, tubular film to use later to make bags, e.g., either end-seal bags typically made by transversely heat sealing across the width of flattened tubing followed by severing the tubing so that the transverse seal forms the bag bottom, or side-seal bags in which the transverse heat seals form the bag sides and one edge of the tubing forms the bag bottom. Such bags are typically used by placing the food product in the bag, evacuating the bag, and either heat sealing the bag mouth or gathering and applying a metal clip around the gathered mouth of the bag to form a seal. The bag is then immersed in hot water at approximately the same temperature at which the film was stretch oriented, typically about 160° to 205°F. (61° to 96°C), hot water immersion being one of the quickest and most economical means of transferring sufficient heat to the film to shrink it uniformly. Alternatively, the bag may serve as a liner of a cooking mold.

A plastic, adhering cook-in package such as a casing is described by Schirmer, in U. S. Patent No. 4,606,922 as well as a method for enhancing yield of a cook-in packaged meat product. The method includes first providing an adhering cook-in container including a flexible thermoplastic envelope being substantially conformable to a contained meat product and having an inner meat-contacting surface of a selectively irradiated ionomer of a metal salt neutralized copolymer of ethylene and acrylic acid or methacrylic acid, then conforming the container about a selected meat product and cooking the packaged product, whereupon the inner surface of the envelope bonds to the meat product substantially to prevent cook-out of fluids. Representatively, the ionomer of the inner binding surface is Surlyn, and a typical casing or envelope is of the structure: nylon 6/adhesive/Surlyn.

A flexible plastic adhering cook-in package is described by Thompson in U. S. Patent No. 4,411,919, as well as a method for enhancing yield of cook-in packaged meat product. The method includes: providing an adhering cook-in package comprising a flexible plastic container substantially conformable to a selected meat product and having an inner meat product contacting surface of polymeric olefin. This container is subjected to an energetic radiation surface treatment in the presence of oxygen sufficient to cause the inner surface to adhere to the meat product during cook-in, the container having been formed from hot blown tubular film. The package is conformed about a selected meat product followed by cooking the packaged product, whereupon the inner surface adheres to the meat product to substantially prevent cook-out of fluids.

Erk et al, U. S. Patent No. 4,303,711, describes a tubular film consisting of biaxially stretched plastic material for packing and casing, paste type foodstuffs that are heated after packing or are packed in a hot fluid state. The film is a mixture of approximately 50-99 parts by weight of at least one aliphatic polyamide having a glass transition point in the dry state of at least 48°C, and a glass transition point after moisture absorption of 3°C or less and approximately 1-50 parts by weight of one or more members of the group consisting of an ionomer resin, a modified ethylene/vinyl acetate acid copolymer and a modified polyolefin.

Erk et al, U. S. Patent No. 4,601,929, relates to a single layer of polyamide film for packing and casing foodstuffs in paste form, especially foodstuffs that are packed when hot or are subject to heat treatment after packing.

Ghiradello et al, U. S. Patent No. 4,568,580, relates to an article of manufacture for packaging food products comprising a first film section having at least one surface comprising a copolyamide obtained by random copolymerization of precursor monomers of at least two different polyamides. The copolyamide has a melting point measured on a Perkin Elmer DSC-2 device in the range from 120°C to 240°C. The article includes a second film section of a film having a surface comprising the aforesaid copolyamide and at least one heat weld between the copolyamide surfaces of said first and second film sections. The article is capable of withstanding heat treatment at temperatures from 70°C to 120°C for at least 10 minutes without suffering damage to the heat weld.

Oberle, U. S. Patent No. 4,855,183 discloses a cook-in film having a first food contact layer comprising a polyamide composition.

Rees, U. S. Patent No. 3,355,319 for "Self-Supporting Film With A Heat-Sealable Coating of An Ionic Copolymer Of An Olefin And Carboxylic Acid With Metal Ions Distributed Throughout" and Murch, U. S. Patent No. 3,845,163 for "Blends of Polyamides and Ionic Copolymer" assigned to E. I. du Pont de Nemours and Company, relate to metal salt neutralized copolymers of an alpha olefin having the formula RHC=CH₂ wherein R is H or C₁ to C₈ alkyl and an alpha-beta-ethylenically unsaturated carboxylic acid. Such materials are marketed by du Pont under the name, Surlyn.

Multiple layer cook-in film from which packages, such as casings or bags, can be made which exhibit improved heat seal strength, yet still retain at least some food adherence characteristics are known. These multilayer film structures have a "sealing and food contact" layer comprising a blend of a first polyamide and a second polyamide and exhibit improved hot and cold heat seal characteristics as compared to known films having a Surlyn} or single polyamide food contact surface that adheres to a food product during cook-in, such as some of the films described in Schirmer, U. S. Patent No. 4,606,922, Oberle et al, U. S. Patent No. 4,469,742 and Oberle, U. S. Patent No. 4,855,183, discussed above. Such known films include food contact layers comprising an ethylene acrylic acid copolymer or an ethylene methacrylic acid copolymer, with or without metal salt neutralization; a polyamide; or mixtures thereof.

These films with improved heat seal characteristics generally have the structure: (sealing and food contact layer)/(core layer); (sealing and food contact layer)/(core layer)/(barrier layer); (sealing and food contact layer)/(core layer)/(barrier layer)/(abuse layer), wherein the sealing and contact layer comprises a blend of a first polyamide and a second polyamide. These films are manufactured by providing for said first layer with a blend of a first polyamide and a second polyamide extruding said first layer into a multiple layer film, and prior to or after the extruding of said first layer, optionally subjecting said first layer to an energetic radiation surface treatment.

Although the sealing and food contact layer comprising a blend of a first polyamide and a second polyamide provided seal strengths that did not decline in time as compared to the Surlyn or single polyamide food contact surface, additional care had to be taken in manufacturing these films to prevent frequent bubble breaks in the biaxial processing steps where the tubular film was stress oriented in the machine direction and the transverse direction. Additionally, even with the improved seal strength stability over time, means were being sought to obtain seal strength stability that was even better than that achieved with this improved sealing and food contact layer comprising a blend of a first polyamide and a second polyamide. These improvements in seal strength were also being sought for pigmented cook-in films, especially white cook-in films. Lastly, films of this type can be more advantageously used if they can be designed to have lower shrink temperature settings in use, since the faster they conform to the surface of the food packaged therein, the greater the likelihood that such films will not expel fluids during cook-in.

Cook-in films comprising a blend of polyamides in the food-contact layer are also disclosed in EP-A-0,451,977.

The use of anhydride-modified alpha-olefin copolymers having rubber moieties in moulded laminates and in blow moulded containers is disclosed in EP-A-0,266,982 and EP-A-0,407,880 respectively.

Accordingly, it is an object of the present invention to overcome the above and other difficulties encountered in the prior art.

The present invention seeks to provide a novel cook-in film which is readily biaxially oriented, and in particular which is readily stress oriented biaxially as a tube by means of forming a bubble wherein bubble breakage is substantially minimized or eliminated.

The present invention further seeks to provide a method for manufacturing such a novel cook-in film wherein the sealing and food contact layer comprises a blend of a first polyamide and a second polyamide.

The present invention further seeks to provide a novel cook-in film with improved seal strength stability over time where the cook-in film has a sealing and food contact layer comprising a blend of a first polyamide and a second polyamide, and which preferably has a colouring agent incorporated therein.

The present invention yet further seeks to provide a novel cook-in film that has lower shrink temperature settings in use.

The present invention provides a novel multilayer cook-in film comprising a first sealing and food contact layer comprising a blend of a first polyamide and a second polyamide, and at least one core layer comprising an anhydride modified alpha-olefin copolymer having rubber moieties. A barrier layer followed by an abuse layer may be placed on the core layer in that order each of these layers optionally being bonded to adjacent layers by a tie layer.

The present invention further provides a method for preparing a film of the invention, which method comprises:
(1) forming a blend of first and second polyamides;
(2) forming said blend into a first layer;
(3) forming a multilayer film comprising said first layer, and at least one core layer comprising an anhydride modified alpha-olefin copolymer having rubber moieties optionally blended with an alpha-olefin copolymer;
and bonding said at least one core layer to said first layer.

The cook-in film of the present invention comprises any of a variety of multilayer cook-in packaging films so long as the first food contact layer of the film comprises a blend of a first polyamide and a second polyamide and the core layer comprises a rubber and anhydride modified alpha-olefin copolymer formed for example by the copolymerization of an alpha-olefin with ethylene or a different alpha-olefin by means of a Ziegler-Natta catalyst and referred to hereafter as an alpha-olefin copolymer.

The term alpha-olefin copolymers as defined herein refers to the newer copolymers of ethylene (or propylene or butene) with one or more comonomers selected from C₃ to about C₁₀ alpha-olefins but especially comprises ethylene copolymers with C₄ to about C₁₀ alpha-olefins such as butene-1, pentene-1, hexene-1, octene-1, and the like in which the polymer molecules comprise long chains with few side chains or branches and sometimes are referred to as linear polymers. These polymers are obtained by low pressure polymerization processes. The side branching which is present will be short as compared to non-linear polyethylenes. The molecular chains of a linear polymer may be intertwined, but the forces tending to hold the molecules together are physical rather than chemical and thus may be weakened by energy applied in the form of heat. The ethylene alpha-olefin polymer has a density in the range from about 0.910 g/cc to about 0.940 g/cc, more preferably in the range of from about 0.912 g/cc to about 0.928 g/cc for film making purposes. The melt flow index of these polyethylenes generally ranges from between about 0.1 to about 10 grams per ten minutes and preferably between from about 0.5 to about 3.0 grams per ten minutes (ASTM D 1238). The lower density alpha-olefin copolymers as referred to herein, such as ethylene alpha-olefin copolymers have a density from less than about 0.910 g/cc to about 0.860 g/cc, or even lower.

Recently, a new type of ethylene-based linear polymers has been introduced. These new resins are produced by metallocene catalyst polymerization and are characterized by narrower or more homogeneous compositional properties, such as molecular weight distribution, than resins produced by more conventional metallic catalyst polymerization systems. Conventional metallic catalyst polymerization systems have discrete catalyst composition differences which are manifested as different catalyst reaction sites with each site having different reaction rates and selectivities. Metallocene catalyst systems are characterized as a single indentifiable chemical type which has a singular rate and selectivity. Thus, the conventional systems produce resins that reflect the differential character of the different catalyst sites versus metallocene systems that reflect the single catalytic site. However, it should be noted that at least some previously available ethylene-based linear polymers approximated the physical and compositional properties achieved by the present metallocene catalyzed polyolefins. That is, traditional metallic catalyzed polymerization processes operating at low reaction rates can produce relatively homogeneous resins that compare favorably with the homogeneity of metallocene catalyzed resins. An example of such are the resins sold under the tradename Tafmer by Mitsui.

Various rubber and anhydride modified alpha-olefin copolymers which are known in the art may be employed in the core layer and include rubber (such as ethylene propylene diene monomer, EPDM) and maleic anhydride grafted ethylene alpha-olefin copolymers such as Tymor 1203 supplied by Morton International. Other materials that may be employed in this respect comprise Bynel 4107 supplied by du Pont.

The rubber and anhydride modified alpha-olefin copolymer is preferably used in combination with a lower density alpha-olefin copolymer also prepared by the polymerization of an alpha-olefin and ethylene or a different alpha-olefin by means of a Ziegler-Natta catalyst such as Attane} 4203 sold by the Dow Chemical Company which is made by the polymerization of ethylene and octene and has a density of about 0.905 g/cc. Other art known equivalent lower density alpha-olefin copolymers materials may also be employed. The rubber and anhydride modified alpha-olefin copolymer may be used in an amount from about 65 to about 100 wt%, especially from about 70 to about 100 wt%, and preferably from about 75 to about 100 wt%, the balance of the core polymer comprising the lower density alpha-olefin copolymer.

When the material includes a colorant such as an inorganic pigment or an organic dye, the colorant is preferably included in the core layer in an amount sufficient to impart the desired colored effect. However, the colorant may also be included in other layers such as the abuse layer. In one embodiment, a white pigment is employed such as TiO₂ in combination with a low density polyethylene (LDPE), the amount of colorant employed in this respect comprising anywhere from about 20 to about 80% by weight, especially from about 30 to about 70% by weight and preferably from about 40 to about 60% by weight based on the total amount of LDPE. A preferred commercially available colorant is EPE 10214-C, a 50% TiO₂, 50% LDPE color concentrate supplied by Teknor Color. Other colorants which may be employed in accordance with the present invention are EEV-8802 from Teknor Color and NC 11375 from Plastics Color Chip. Each of these are 50% TiO₂/50% EVA color concentrates. Also within the scope of the present invention is 11853 polyethylene masterbatch from Ampacet, a 50% TiO₂, 50% linear low density ethylene alpha-olefin copolymer blend.

Thus, the invention comprises at a minimum, the foregoing (sealing and food contact layer)/(core layer) and in further embodiments the minimal structure: (sealing and food contact layer)/(core layer)/(barrier layer) and in another advantageous embodiment has the minimal structure: (sealing and food contact layer)/(core layer)/(barrier layer)/(abuse layer). Each of the layers may also be optionally bonded to one another by a tie layer as well.

In an advantageous embodiment, the composition in the first layer is a blend of about 10% to about 90% nylon 12 and about 90% to about 10% nylon 6/12. A more preferred blend is about 20% to about 80% nylon 12 and about 80% to about 20% nylon 6/12. Most preferred is a 50% nylon 12, 50% nylon 6/12 blend. Preferably, the first layer also includes about 0.010% to about 5% of an antioxidant such as Irganox} 1098. A more preferable range for the antioxidant is about 0.15% to 1.0%, even more preferably about 0.15% to about 0.75%. All percentages given herein are by weight of the appropriate layer or blend. The food contact layer bonds or adheres to the contained product such as a meat product during cook-in, and as noted previously, prevents cook-out of fluids and is alternatively referred to as the adhering layer.

The food contact layer can optionally be subjected to an energetic radiation treatment, including, but not limited to corona discharge, plasma, flame, ultraviolet, and high energy electron treatment. For instance, the food contact layer may be selectively irradiated with high energy electrons which advantageously may be accomplished during irradiation of the overall multilayer film structure for cook-in integrity, as further discussed below. Radiation dosages are referred to herein in terms of the radiation unit "RAD," with one million RADS or a megarad being designated as "MR." A suitable radiation dosage of high energy electrons is in the range of up to about 12 MR, more preferably about 2 to about 9 MR.

The polyamides employed in the first food contact layer of the films of this invention are well known in the art and embrace those resins commonly designated as nylons. Typically, in the conventional method, some polyamide resins are made by condensation of equimolar amounts of a saturated dicarboxylic acid containing from about 2 to 10 carbon atoms with an alkylene diamine, in which the alkylene group contains from about 2 to about 10 carbon atoms. Excess diamine may be used, thereby giving an excess of amine end groups over carboxyl end groups in the polyamide. Other polyamide resins are polymerized by addition reactions of ring compounds that contain both acid and amine groups on the monomer. Examples of suitable polyamides include, but are not limited to, polycaprolactam (nylon 6), (nylon 6/9), (nylon 6/10), the polycondensation product of hexamethylenediamine and a 12-carbon dibasic acid (nylon 6/12), the polymerization product of lauric lactam of cyclododecalactam with 11 methylene units between the linking -NH-CO- groups in the polymer chain (nylon 12), the polyaddition product of the monomer 11-aminoundecanoic acid (nylon 11), polyhexamethylene adipamide (nylon 66), (nylon 69), polyhexamethylene sebacamide (nylon 610), and (nylon 612). It is also possible to use in this invention polyamides prepared by the copolymerization of two of the above polymers or terpolymerization of the above polymers or their components. A very desirable nylon is Vestamid} L1940 or L1840, which is a nylon 12 supplied by Chemische Werke Huls AG, Germany. Also, Rilsan nylon 11 or Rilsan nylon 12, supplied by Atochem, Inc., Polymers Division, Glen Rock, N.J., may be advantageously employed. Also, Grilamid nylon 12 from Emser Industries, Sumter, S. C. may be advantageously employed. A preferred nylon 6/12 is Grilon CF6S also from Emser Industries. A nylon 12/12 available from du Pont is also useful in the present invention.

The barrier layer employed according to the present invention preferably comprises an oxygen barrier layer and formed from any of the art known polymers that are suitable in this regard such as the polyethylenes including the polyethylene copolymers as defined herein, especially ethylene vinyl alcohol copolymers and Saran.

The abuse layer comprises any polymer having acceptable toughness and abrasion resistance which is known in the art and in one embodiment comprises the polyethylenes as defined herein and especially the ethylene alpha-olefin copolymers or the lower density alpha-olefin copolymers. These materials are preferably used in combination with ethylene copolymers and especially ethylene acrylic acid or ethylene methacrylic acid or acrylic ester copolymers such as ethylene methyl acrylate, ethylene ethyl acrylate, or ethylene butyl acrylate copolymers. It has also been found that an ethylene vinyl acetate copolymer, such as PE 1651 from Rexene, a 6.5% vinyl acetate EVA or Elvax EP 4091 from du Pont, a 7.5% vinyl acetate EVA, provides excellent optics when employed in the abuse layer, either alone or in combination with a color concentrate.

The tie layer will also comprise any polymer that will have excellent adhesion to the barrier layer and the core layer or the abuse layer or both the core layer and the abuse layer. The various polyethylenes including the polyethylene copolymers as described herein and the ethylene vinyl acetate copolymers are useful as tie layers employed according to the present invention. Preferably, the tie layer comprises an anhydride modified alpha-olefin copolymer having rubber moieties such as is contained in the core layer, discussed above. Here again, a preferred resin is Tymor 1203 from Morton International. Also suitable is Bynel 4107 from du Pont.

Suitable "polyethylenes" employed in other layers as discussed below are the families of resins obtained by substantially polymerizing the gas ethylene, C₂H₄. By including comonomers, and varying catalysts and methods of polymerization, properties such as density, melt index, crystallinity, degree of branching and cross-linking, molecular weight and molecular weight distribution can be regulated over wide ranges. Further modifications are obtained by other processes such as halogenation, and compounding additives.

The term "ethylene vinyl acetate copolymer" (EVA) as used herein for a type of polyethylene refers to a copolymer formed from ethylene and vinyl acetate monomers wherein the ethylene derived units in the copolymer are present in major amounts and the vinyl acetate derived units in the copolymer are present in minor amounts. EVA is known not only for having structural strength, as ethylene alpha-olefin polymer does, but also for providing excellent adhesion to an adjacent layer, which decrease or even obviate the need for an "adhesive." EVA copolymers can be hydrolyzed to ethylene vinyl alcohol copolymers, (EVOH), which are employed principally as a barrier layer according to the present invention.

The term "ethylene methylacrylate copolymer" (EMA) as used herein for a type of polyethylene, refers to a copolymer formed from ethylene and methylacrylate monomers.

The term "ethylene ethylacrylate copolymer" (EEA) as used herein for a type of polyethylene, refers to a copolymer formed from ethylene and ethylacrylate monomers.

The term "ethylene butyl acrylate copolymer" (EBA) as used herein for a type of polyethylene, refers to a copolymer formed from ethylene and butyl acrylate monomers.

Blends of all families of polyethylenes, such as blends of EVA, EVOH, EMA, EEA, EBA, lower density ethylene alpha-olefin copolymers, EMAA (ethylene methacrylic acid copolymer) EAA (ethylene acrylic acid copolymer) and ethylene alpha-olefin copolymers, may also be advantageously employed.

The term "oriented" is also used herein interchangeably with the term "heat shrinkable," these terms designating a material which has been stretched and set by cooling while substantially retaining its stretched dimensions. An oriented (i.e. heat shrinkable) material will tend to return to its original unstretched (unextended) dimensions when heated to an appropriate elevated temperature.

The cook-in film of the present invention is preferably oriented and is formed by extrusion processes especially art-known coextrusion methods. It is initially cooled to by, for example, cascading water quenching, after which it is reheated to within its orientation temperature range and oriented by stretching. The stretching to orient may be accomplished in many ways such as, for example, by "blown bubble" techniques or "tenter framing." These processes are well known to those skilled in the art and refer to orientation procedures whereby the material is stretched in the cross or transverse direction (TD) and/or in the longitudinal or machine direction (MD). After being stretched, the film is quickly quenched while substantially retaining its stretched dimensions to cool the film rapidly and thus set or lock in the oriented molecular configuration.

If a film having little or no orientation is desired, e.g. nonoriented or non-heat shrinkable film, the film may be formed from a nonorientable material or, if formed from an orientable material may be "hot blown." In forming a hot blown film, the film is not cooled immediately after extrusion or coextrusion but rather is first stretched shortly after extrusion while the film is still at an elevated temperature above the orientation temperature range of the material. Thereafter, the film is cooled, by well known methods. Those having skill in the art are familiar with this process and the fact that the resulting film has substantially unoriented characteristics. Other methods for forming unoriented films are well known such as cast extrusion or cast coextrusion methods.

Whichever film has been made (the nonoriented molecular configuration or the stretch oriented molecular configuration), it may as noted before, be subjected to an energetic radiation surface treatment, which is advantageously provided by a high energy electron treatment. It may be irradiated, for example, by guiding it through the beam of an electron accelerator to receive a radiation dosage up to about 12 MR, more preferably a dosage in the range of about 2-9 MR. The product to be packaged may first be enclosed in the material by heat sealing the film to itself where necessary and appropriate to form a pouch or bag and then inserting the product therein. If the material is manufactured by the "blown bubble" technique in tubular form it may be slit and opened up to form a sheet of film material which can be utilized to overwrap the product. These packaging methods are all well known to those skilled in the art.

If the material is heat shrinkable, the enclosed product may be subjected to elevated temperatures, for example, by passing it through a hot air or hot water tunnel. This causes the heat shrinkable film to shrink around the product to produce a tight wrapping that closely conforms to the contour of the product. As stated above, the film sheet or tube may be formed into bags or pouches and thereafter utilized to package a product. In this case, if the film has been formed as a tube it may be preferable first to slit the tubular film to form a film sheet and thereafter form the sheet into bags or pouches. Such bag or pouch forming methods, likewise, are well known to those skilled in the art.

As noted, the film layers may be formed by coextrusion, with additional layers thereafter being extrusion coated thereon to form multilayer films. Two multilayer tubes may also be formed with one of the tubes thereafter being extrusion coated or laminated onto the other. The extrusion coating method of film formation is preferable to coextruding the entire film when it is desired to subject one or more layers of the film to a treatment which may be harmful to one or more of the other layers. This may be done where it is desired to irradiate one or more layers of a film with high energy electrons where the film contains a barrier layer of one or more copolymers of vinylidene chloride (e.g., Saran), such as vinylidene chloride and vinyl chloride or vinylidene chloride and methyl acrylate as well as vinylidene chloride with ethyl acrylate or acrylonitrile.

Films of this type would, for example, comprise those where the barrier layer is a Saran layer in addition to or instead of an EVOH layer. Those skilled in the art generally recognize that irradiation with high energy electrons is generally harmful to such Saran barrier layer compositions, as irradiation may degrade and discolor Saran, making it turn brown. Thus, if full coextrusion followed by high energy electron irradiation of the multilayer structure is carried out on a film having a barrier layer containing a Saran} layer, the irradiation should be conducted at low levels and with care. Alternatively, this may be avoided by extruding a first layer or layers, subjecting the layer or layers to high energy electron irradiation and thereafter applying the Saran barrier layer and, for that matter, other layers (which may or may not have been irradiated) sequentially onto the outer surface of the extruded previously irradiated tube. This sequence allows for high energy electron irradiation of the first layer or layers without subjecting the Saran} barrier layer to harmful discoloration.

Thus, as used herein the term "extrusion" or the term "extruding" is intended to include coextrusion, extrusion coating, or combinations thereof.

The above general outline for manufacturing of films is not meant to be all inclusive since such processes are well known as set forth in U. S. Patent Nos. 4,274,900; 4,229,241; 4,194,039; 4,188,443' 4,048,428; 3,821,182 and 3,022,543.

The following examples are illustrative of the invention.

Cook-in films having the following layers were prepared by a conventional extrusion process.

| Layers 1 Sealant | 2 Tie | 3 Nylon | 4 Barrier | 5 Nylon | 6 Tie | 7 Abuse |
|---|---|---|---|---|---|---|
| Ex. 1 (Comparison) | | | | | | |
| | N6/12(40%) | EAO (78%) | | | | EBA (40%) |
| | | COLOR (22%) | | | | |
| % thickness | 20.3 | 28.5 | 6.7 | 6.7 | 6.7 | 31.2 |
| Ex. 2 | N12(50%) | R-A/ EAO (80%) | R-A/ EAO | EVOH | R-A/ EAO | EAO-1 (60%) |
| | N6/12(50%) | EAO-1(20%) | | | | EBA (40%) |
| % thickness | 20 | 21.2 | 6.7 | 6.7 | 6.7 | 38.8 |

| | Layers 1 Sealant | 2 Core | 3 Tie | 4 Barrier | 5 Tie | 6 Abuse |
|---|---|---|---|---|---|---|
| Ex. 3 | N12(50%) | R-A/ EAO (75%) | R-A/ EAO | EVOH | R-A/ EAO | EAO-1 (60% |
| | N6/12(50%) | COLOR-1(25%) | | | | EBA (40%) |
| % thickness | 20 | 21.2 | 6.7 | 6.7 | 6.7 | 38.8 |
| Ex. 4 | N12(50%) | R-A/ EAO (80%) | R-A/ EAO | EVOH | R-A/ EAO | EVA-1 |
| | N6/12(50%) | EAO-2(20%) | | | | |
| % thickness | 20 | 21.2 | 6.7 | 6.7 | 6.7 | 38.8 |
| Ex. 5 | N12(50%) | R-A/ EAO (80%) | R-A/ EAO | EVOH | R-A/ EAO | EAO-2(70%) |
| | N6/12(50%) | EAO-2(20%) | | | | EMAA-1(30%) |
| % thickness | 20 | 21.2 | 6.7 | 6.7 | 6.7 | 38.8 |
| Ex. 6 | N12(50%) | R-A/ EAO (80%) | R-A/ EAO | EVOH | R-A/ EAO | EAO-2(70%) |
| | N6/12(50%) | EAO-2(20%) | | | | EMAA-2(30%) |
| % thickness | 20 | 21.2 | 6.7 | 6.7 | 6.7 | 38.8 |
| Ex. 7 | N12(50%) | R-A/ EAO (80%) | R-A/ EAO | EVOH | R-A/ EAO | EAO-2(70%) |
| | N6/12(50%) | EAO-2(20%) | | | | EMAA-3(30%) |
| % thickness | 20 | 21.2 | 6.7 | 6.7 | 6.7 | 38.8 |
| Ex. 8 | N12(50%) | R-A/ EAO (80%) | R-A/ EAO | EVOH | R-A/ EAO | EAO-2(70%) |
| | N6/12(50%) | EAO-2(20%) | | | | EAA-1(30%) |
| % thickness | 20 | 21.2 | 6.7 | 6.7 | 6.7 | 38.8 |
| Ex. 9 | N12(50%) | R-A/ EAO (80%) | R-A/ EAO | EVOH | R-A/ EAO | EAO-2(70%) |
| | N6/12(50%) | EAO-2(20%) | | | | EMA(30%) |
| % thickness | 20 | 21.2 | 6.7 | 6.7 | 6.7 | 38.8 |
| Ex. 10 | N12(50%) | R-A/ EAO (80%) | R-A/ EAO | EVOH | R-A/ EAO | EVA-1(80%) |
| | N6/12(50%) | EAO-2(20%) | | | | COLOR-2(20% |
| % thickness | 20 | 21.2 | 6.7 | 6.7 | 6.7 | 38.8 |
| Ex. 11 | N12(50%) | R-A/ EAO (80%) | R-A/ EAO | EVOH | R-A/ EAO | EVA-1(70%) |
| | N6/12(50%) | EAO-3(20%) | | | | EAO-3(30%) |
| % thickness | 20 | 21.2 | 6.7 | 6.7 | 6.7 | 38.8 |
| Ex. 12 | N12(50%) | R-A/ EAO (80%) | R-A/ EAO | EVOH | R-A/ EAO | EAO-3(60%) |
| | N6/12(50%) | EAO-3(20%) | | | | EBA(40%) |
| % thickness | 20 | 21.2 | 6.7 | 6.7 | 6.7 | 38.8 |
| Ex. 13 | N12(50%) | R-A/ EAO (80%) | R-A/ EAO | EVOH | R-A/ EAO | EVA-1(70%) |
| | N6/12(50%) | EAO-2(20%) | | | | EAO-3(30%) |
| % thickness | 20 | 21.2 | 6.7 | 6.7 | 6.7 | 38.8 |
| Ex. 14 | N12(50%) | R-A/ EAO (80%) | R-A/ EAO | EVOH | R-A/ EAO | EVA-1(70%) |
| | N6/12(50%) | EAO-2(20%) | | | | EAO-2(30%) |
| % thickness | 20 | 21.2 | 6.7 | 6.7 | 6.7 | 38.8 |
| Ex. 15 | N12(50%) | R-A/ EAO (80%) | R-A/ EAO | EVOH | R-A/ EAO | EVA-2(70%) |
| | N6/12(50%) | EAO-2(20%) | | | | EAO-2(30%) |
| % thickness | 20 | 21.2 | 6.7 | 6.7 | 6.7 | 38.8 |
| Ex. 16 | N12(50%) | R-A/ EAO (80%) | R-A/ EAO | EVOH | R-A/ EAO | EVA-1(50%) |
| | N6/12(50%) | EAO-2(20%) | | | | EAO-2(30%) COLOR-1(20%) |
| % thickness | 20 | 21.2 | 6.7 | 6.7 | 6.7 | 38.8 |
| Ex. 17 | N12(50%) | R-A/ EAO (80%) | R-A/ EAO | EVOH | R-A/ EAO | EVA-2(50%) COLOR-1(20%) |
| | N6/12(50%) | EAO-2(20%) | | | | EAO-2(30%) |
| % thickness | 20 | 21.2 | 6.7 | 6.7 | 6.7 | 38.8 |
| Ex. 18 | N12(50%) | R-A/ EAO (80%) | R-A/ EAO | EVOH | R-A/ EAO | EVA-1(50%) |
| | N6/12(50%) | EAO-3(20%) | | | | EAO-3(30%) COLOR-1(20%) |
| % thickness | 20 | 21.2 | 6.7 | 6.7 | 6.7 | 38.8 |

In the foregoing Examples the following materials were employed:

| | |
|---|---|
| N12 | Vestamid} L 1940 or Vestamid} L1840, Natural, sold by Huls America, Inc. Nylon 12 (polylauryl lactam) |
| | |
| N6/12 | Grilon} CF6S, sold by Emser, Nylon 6/12 (caprolactam/ laurolactam copolyamide) |
| | |
| R-A/EAO | Ethylene alpha-olefin polymer Tymor} 1203, sold by Morton International, Rubber and maleic anhydride grafted |
| | |
| A/EVA | Ethylene vinyl acetate copolymer, anhydride grafted polyolefin, Bynel 3062 sold by du Pont |
| | |
| EVOH | Ethylene vinyl alcohol copolymer, Eval LC-E105A sold by Eval of America |
| | |
| EAO-1 | Lower density ethylene alpha-olefin copolymer ATTANE} 4203, sold by Dow Chemical, ethylene polymerized with 1-octene having a density of 0.905 g/cc |
| | |
| EAO-2 | ethylene 1-octene copolymer, Dowlex} 2045 sold by Dow Chemical |
| | |
| EAO-3 | metallocene catalyzed ethylene butene copolymer having a density of 0.885 g/cc and a melt index of 2.2, SLP-4011 from Exxon. |
| | |
| EBA | EA 705-009, sold by Quantum Chemical Company, ethylene butyl acrylate copolymer having a butyl acrylate content of 5% by weight. |
| | |
| COLOR-1 | white color concentrate, EPE 10214-C sold by Teknor Color, a 50% TiO₂/50% LDPE blend. |
| | |
| COLOR-2 | white color concentrate, EEV-8802 sold by Teknor Color, a 50% TiO₂/50% EVA blend |
| | |
| EVA-1 | ethylene vinyl acetate, PE 1651 sold by Rexene, a 6.5% vinyl acetate EVA |
| | |
| EVA-2 | ethylene vinyl acetate, NA 362-005 sold by Quantum, a 6.5% vinyl acetate EVA |
| | |
| EMAA-1 | ethylene methylacrylic acid, Nucrel} 1202 HC sold by du Pont, a 12% methacrylic acid EMAA |
| | |
| EMAA-2 | ethylene methylacrylic acid, Nucrel} 0902 sold by du Pont, a 9% methacrylic acid EMAA |
| | |
| EMAA-3 | ethylene methylacrylic acid, Nucrel} 0407 sold by du Pont, a 4% methacrylic acid EMAA |
| | |
| EAA | ethylene acrylic acid, Primacor} 1410 sold by Dow, a 9.5% acrylic acid EAA |
| | |
| EMA | ethylene methyl acrylate, XS 53.04 sold by Exxon |

It has been found in the present invention that the anhydride and rubber moieties of the ethylene alpha-olefin polymer has to be approximately 8% by weight in order to obtain the good adhesion properties of the core material to the other layer or layers as set forth herein.

The foregoing films were biaxially oriented (MD 285%; TD 250%) by employing the blown bubble method as described herein and both have improved bubble stability when compared to cook-in films that do not employ the core layer of the present invention. Furthermore, lower shrink temperature settings were obtained, i.e., about 82°C as compared to films in which the core layer of the present invention was not employed which are about 88°C.

The films of Examples 11, 12, 13, and 18 were oriented at 91-93°C (195 - 200°F). This lower orientation temperature resulted in a 10 - 12% higher shrink in the transverse direction and improved cold seal strength.

The foregoing description of preferred embodiments of the invention have been presented for purposes of illustration and description. It is not intended to be exhaustive or to limit the invention to the precise form disclosed, and modifications and variations are possible in light of the above teachings or may be acquired from practice of the invention. The embodiment were chosen and described in order to explain the principles of the invention and its practical application to enable one skilled in the art to utilize the invention in various embodiments and with various modifications as are suited to the particular use contemplated. It is intended that the scope of the invention be defined by the claims appended hereto, and their equivalents.

## Claims

1. A multilayer cook-in film comprising a first sealing and food contact layer comprising a blend of a first polyamide and a second polyamide, and at least one core layer comprising an anhydride modified alpha-olefin copolymer having rubber moieties.

2. A film according to claim 1, wherein said core layer comprises as said anhydride modified alpha-olefin copolymer, an anhydride modified ethylene alpha-olefin copolymer having rubber moieties, blended with an ethylene alpha-olefin copolymer.

3. A film according to claim 2, wherein said alpha-olefin copolymer has a density less than that of the anhydride modified alpha-olefin copolymer.

4. A film according to claim 2 or 3, wherein said alpha-olefin copolymer is a metallocene catalyzed ethylene alpha-olefin copolymer.

5. A film according to any one of the preceding claims, wherein said rubber moieties comprise an ethylene propylene diene monomer (EPDM) type rubber and said anhydride is maleic anhydride.

6. A film according to claim 5, wherein said EPDM moieties and said anhydride are present in said anhydride modified copolymer in an amount of from 6 to 10% by weight.

7. A film according to claim 6, wherein said EPDM moieties and said anhydride are present in an amount of about 8% by weight.

8. A film according to any one of the preceding claims, wherein said core layer further comprises a color concentrate.

9. A film according to claim 8, wherein said color concentrate comprises an inorganic pigment and a polymeric carrier.

10. A film according to claim 9, wherein said pigment is TiO₂.

11. A film according to claim 9, wherein said carrier is low density polyethylene.

12. A film according to claim 9, wherein said carrier is ethylene vinyl acetate copolymer.

13. A film according to any one of the preceding claims, wherein said polyamides are selected from nylon 6, nylon 11, nylon 12, nylon 66, nylon 610, nylon 6/9, nylon 6/10, nylon 6/12, nylon 69, nylon 612, nylon 12/12, a nylon produced from the polycondensation or polyaddition of any of the acid and amine compounds used to produce any of said nylons, a copolymer of any of said nylons, a terpolymer of any of said nylons, or a mixture thereof.

14. A film according to any one of claims to 13, wherein said polyamide blend comprises from 10% to 90% by weight of nylon 12 and from 90% to 10% by weight of nylon 6/12 and said core layer comprises from 65% to 100% by weight of said anhydride modified ethylene alpha-olefin copolymer and from 35% to 0% by weight of said ethylene alpha-olefin copolymer.

15. A film according to claim 14, wherein said polyamide blend further comprises between 0.01% and 5% by weight of an antioxidant.

16. A film according to any one of the preceding claims, comprising the structure: first layer/core layer/barrier layer/abuse layer.

17. A film according to claim 16, further comprising a polymeric adhesive layer located on each surface of the barrier layer.

18. A film according to claim 17, wherein said polymeric adhesive layer comprises an anhydride modified alpha-olefin copolymer having rubber moieties.

19. A film according to any one of the preceding claims, which is extruded and biaxially oriented and has a biaxial free shrinkage at 85°C (185°F) of up to about 55% (ASTM D 2732).

20. A film according to any one of the preceding claims, wherein at least the first layer is cross-linked.

21. A film according to claim 20, wherein crosslinking is effected by an energetic radiation treatment corresponding to a dosage of up to about 12 MR.

22. A method for preparing a film as defined in any one of the preceding claims, which method comprises:
(1) forming a blend of first and second polyamides;
(2) forming said blend into a first layer;
(3) forming a multilayer film comprising said first layer, and at least one core layer comprising an anhydride modified alpha-olefin copolymer having rubber moieties optionally blended with an alpha-olefin copolymer;
and bonding said at least one core layer to said first layer.

23. A method according to claim 22, wherein when the first layer is subjected to an energetic radiation treatment, said treatment takes place prior to or after forming said first layer.

24. A method according to claim 22 or 23, wherein said film is extruded and biaxially oriented by the blown bubble method to an extent corresponding to a biaxial free shrinkage at 85°C (185°F) of up to about 55% (ASTM D 2732).

## Patentansprüche

1. Mehrschichtige Kochfolie, die eine erste Siegel- und Nahrungsmittelkontaktschicht, die ein Gemisch aus erstem Polyamid und zweitem Polyamid umfasst, und mindestens eine Kernschicht umfasst, die anhydridmodifiziertes α-Olefincopolymer mit Kautschukanteilen umfasst.

2. Folie nach Anspruch 1, bei der die Kernschicht als anhydridmodifiziertes α-Olefincopolymer anhydridmodifiziertes Ethylen/α-Olefin-Copolymer mit Kautschukanteilen umfasst, das mit Ethylen/α-Olefin-Copolymer gemischt ist.

3. Folie nach Anspruch 2, bei der das α-Olefincopolymer eine geringere Dichte als diejenige des anhydridmodifizierten α-Olefincopolymers hat.

4. Folie nach Anspruch 2 oder 3, bei der das α-Olefincopolymer metallocenkatalysiertes Ethylen/α-Olefin-Copolymer ist.

5. Folie nach einem der vorhergehenden Ansprüche, bei der die Kautschukanteile Kautschuk vom Ethylen/Propylen/Dienmonomer- (EPDM)-Typ umfassen und das Anhydrid Maleinsäureanhydrid ist.

6. Folie nach Anspruch 5, bei der die EPDM-Anteile und das Anhydrid in dem anhydridmodifizierten Copolymer in einer Menge von 6 bis 10 Gew.% vorhanden sind.

7. Folie nach Anspruch 6, bei der die EPDM-Anteile und das Anhydrid in einer Menge von etwa 8 Gew.% vorhanden sind.

8. Folie nach einem der vorhergehenden Ansprüche, bei der die Kernschicht ferner Farbkonzentrat umfasst.

9. Folie nach Anspruch 8, bei der das Farbkonzentrat anorganisches Pigment und polymeren Träger umfasst.

10. Folie nach Anspruch 9, bei der das Pigment TiO₂ ist.

11. Folie nach Anspruch 9, bei der der Träger Polyethylen mit niedriger Dichte ist.

12. Folie nach Anspruch 9, bei der der Träger Ethylen/Vinylacetat-Copolymer ist.

13. Folie nach einem der vorhergehenden Ansprüche, bei der die Polyamide ausgewählt sind aus Nylon 6, Nylon 11, Nylon 12, Nylon 66, Nylon 610, Nylon 6/9, Nylon 6/10, Nylon 6/12, Nylon 69, Nylon 612, Nylon 12/12, durch die Polykondensation oder Polyaddition von beliebigen der Säure- und Aminverbindungen, die zur Herstellung von jeglichen dieser Nylons verwendet werden, hergestelltem Nylon, Copolymer von jeglichen dieser Nylons, Terpolymer von jeglichen dieser Nylons oder Mischungen derselben.

14. Folie nach einem der Ansprüche 2 bis 13, bei der das Polyamidgemisch 10 Gew.% bis 90 Gew.% Nylon 12 und 90 Gew.% bis 10 Gew.% Nylon 6/12 umfasst und die Kernschicht 65 Gew.% bis 100 Gew.% des anhydridmodifizierten Ethylen/α-Olefin-Copolymers und 35 Gew.% bis 0 Gew.% des Ethylen/α-Olefin-Copolymers umfasst.

15. Folie nach Anspruch 14, bei der das Polyamidgemisch ferner zwischen 0,01 Gew.% und 5 Gew.% Antioxidans umfasst.

16. Folie nach einem der vorhergehenden Ansprüche, die die Struktur erste Schicht/Kernschicht/Sperrschicht/Schutzschicht umfasst.

17. Folie nach Anspruch 16, die ferner eine an jeder Oberfläche der Sperrschicht angeordnete polymere Klebschicht umfasst.

18. Folie nach Anspruch 17, bei der die polymere Klebschicht anhydridmodifiziertes α-Olefin-Copolymer mit Kautschukanteilen umfasst.

19. Folie nach einem der vorhergehenden Ansprüche, die extrudiert und biaxial orientiert ist und eine biaxiale freie Schrumpfung bei 85°C (185°F) von bis zu etwa 55 % (ASTM D 2732) aufweist.

20. Folie nach einem der vorhergehenden Ansprüche, bei der mindestens die erste Schicht vernetzt ist.

21. Folie nach Anspruch 20, bei der Vernetzung durch Behandlung mit energiereicher Strahlung entsprechend einer Dosis von bis zu etwa 12 MR erfolgt ist.

22. Verfahren zur Herstellung von Folie gemäß der Definition in einem der vorhergehenden Ansprüche, bei dem
(1) ein Gemisch aus ersten und zweiten Polyamiden gebildet wird,
(2) das Gemisch zu einer ersten Schicht verarbeitet wird,
(3) eine Mehrschichtfolie gebildet wird, die die erste Schicht und mindestens eine Kernschicht umfasst, die anhydridmodifiziertes α-Olefincopolymer mit Kautschukanteilen umfasst und gegebenenfalls mit α-Olefincopolymer gemischt ist,
und die mindestens eine Kernschicht an die erste Schicht gebunden wird.

23. Verfahren nach Anspruch 22, bei dem, wenn die erste Schicht einer Behandlung mit energiereicher Strahlung unterzogen wird, diese Behandlung vor oder nach der Bildung der ersten Schicht stattfindet.

24. Verfahren nach Anspruch 22 oder 23, bei dem die Folie extrudiert und nach dem Verfahren der aufgeblasenen Blase in einem Maße biaxial orientiert wird, das einer biaxialen freien Schrumpfung bei 85°C (185°F) von bis zu etwa 55 % (ASTM D 2732) entspricht.

## Revendications

1. Film de cuisson multicouches comprenant une première couche de contact alimentaire et de scellement comprenant un mélange d'un premier polyamide et d'un second polyamide, et au moins une couche principale comprenant un copolymère alpha-oléfine modifié en anhydride et ayant des fractions de caoutchouc.

2. Film conformément à la revendication 1, **caractérisé en ce que** ladite couche principale comprend en tant que copolymère alpha-oléfine modifié en anhydride, un copolymère alpha-oléfine d'éthylène modifié en anhydride, ayant des fractions de caoutchouc, mélangé avec un copolymère alpha-oléfine d'éthylène.

3. Film conformément à la revendication 2, **caractérisé en ce que** ledit copolymère alpha-oléfine a une densité inférieure à celle du copolymère alpha-oléfine modifié en anhydride.

4. Film conformément à la revendication 2 ou 3, **caractérisé en ce que** ledit copolymère alpha-oléfine est un copolymère alpha-oléfine d'éthylène catalysé avec un alliage organométallique.

5. Film conformément à l'une quelconque des revendications précédentes **caractérisé en ce que** lesdites fractions de caoutchouc comprennent un caoutchouc de type monomère d'éthylène propylène diène (EPDM) et ledit anhydride est un anhydride maléique.

6. Film conformément à la revendication 5, **caractérisé en ce que** lesdites fractions d'EPDM et ledit anhydride sont présents dans ledit copolymère modifié en anhydride dans une quantité de 6 à 10% en poids.

7. Film conformément à la revendication 6, **caractérisé en ce que** lesdites fractions d'EPDM et ledit anhydride sont présents dans une quantité d'environ 8% en poids.

8. Film conformément à l'une quelconque des revendications précédentes, **caractérisé en ce que** la couche principale comprend également un concentré de couleur.

9. Film conformément à la revendication 8, **caractérisé en ce que** ledit concentré de couleur comprend un pigment inorganique et un support polymérique.

10. Film conformément à la revendication 9, **caractérisé en ce que** le pigment est du TiO2.

11. Film conformément à la revendication 9, **caractérisé en ce que** ledit support est un polyéthylène à basse densité.

12. Film conformément à la revendication 9, **caractérisé en ce que** ledit support est un copolymère d'éthylène - acétate de vinyle.

13. Film conformément à l'une quelconque des revendications précédentes, **caractérisé en ce que** lesdits polyamides sont choisis parmi le nylon 6, nylon 11, nylon 12, nylon 66, nylon 610, nylon 6/9, nylon 6/10, nylon 6/12, nylon 69, nylon 612, nylon 12/12, un nylon produit par la polycondensation ou la polyaddition de l'un des composés acide et amine utilisé pour produire l'un desdits nylons, un copolymère de l'un desdits nylons, un terpolymère de l'un desdits nylons, ou un mélange de ceux-ci.

14. Film conformément à l'une quelconque des revendications 2 à 13, **caractérisé en ce que** ledit mélange de polyamide comprend de 10% à 90% en poids de nylon 12 et de 90% à 10% en poids de nylon 6/12 et que ladite couche principale comprend de 65% à 100% en poids dudit copolymère alpha-oléfine d'éthylène modifié en anhydride et de 35% à 0% en poids dudit copolymère alpha-oléfine d'éthylène.

15. Film conformément à la revendication 14, **caractérisé en ce que** ledit mélange de polyamide comprend en outre entre 0,01% et 5% en poids d'un anti-oxydant.

16. Film conformément à l'une quelconque des revendications précédentes, comprenant la structure : première couche/couche principale/couche d'arrêt/couche de dégradation

17. Film conformément à la revendication 16 , comprenant en outre une couche adhésive polymérique, située sur chaque surface de la couche d'arrêt.

18. Film conformément à la revendication 17, **caractérisé en ce que** ladite couche adhésive polymérique comprend un copolymère alpha-oléfine modifié en anhydride ayant des fractions de caoutchouc.

19. Film conformément à l'une quelconque des revendications précédentes, qui est extrudé et orienté biaxialement et présente un retrait libre biaxial à 85°C (185°F) allant jusqu'à environ 55% (ASTM D 2732).

20. Film conformément à l'une quelconque des revendications précédentes, **caractérisé en ce qu'**au moins la première couche est réticulée.

21. Film conformément à la revendication 20, **caractérisé en ce que** la réticulation est effectuée par un traitement de radiation énergétique correspondant à un dosage allant jusqu'à environ 12 MR.

22. Procédé de préparation d'un film comme défini selon l'une quelconque des revendications précédentes, ledit procédé comprenant :
(1) la formation d'un mélange d'un premier et d'un second polymères ;
(2) la formation dudit mélange dans une première couche ;
(3) la formation d'un film multicouches comprenant ladite première couche, et au moins une couche principale comprenant un copolymère alpha-oléfine modifié en anhydride ayant des fractions de caoutchouc éventuellement mélangées au copolymère alpha-oléfine ;
et l'adhésion de ladite couche principale à ladite première couche.

23. Une méthode conformément à la revendication 22, **caractérisé en ce que** la première couche est soumise à un traitement par radiation énergétique, ledit traitement ayant lieu avant ou après la formation de ladite première couche.

24. Une méthode conformément à la revendication 22 ou 23, **caractérisée en ce que** ledit film est extrudé et biaxialement orienté selon la méthode de la bulle soufflée dans une mesure correspondant à un retrait libre biaxial à 85°C (185°F) allant jusqu'à environ 55% (ASTM D 2732).
